# EUROPEAN PATENT SPECIFICATION

(11) **EP 4 491 888 B1**
(45) Date of publication and mention of the grant of the patent: **13.08.2025**
(21) Application number: 23714217.9
(22) Date of filing: 09.03.2023
(51) Int. Cl.: F16B 13/02, F16B 13/12, F16B 19/10

(54) **COMPOSITE DOWEL FOR JOINING TWO PLATES PROVIDED WITH SLOT HOLES**
VERBUNDDÜBEL FÜR DIE VERBINDUNG VON ZWEI MIT SCHLITZLÖCHERN VERSEHENEN PLATTEN
CHEVILLE COMPOSITE POUR RÉALISER UN ASSEMBLAGE ENTRE DEUX PLAQUES POURVUES D'ORIFICES OBLONGS

(30) Priority: 11.03.2022 ES 202230408 U
(43) Date of publication of application: 15.01.2025
(73) Proprietor: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.
(86) International application number: PCT/ES2023/070131
(87) International publication number: WO 2023/170325

(56) References cited:
- WO-A1-2021/111055
- US-A- 4 840 523
- US-A- 5 387 065
- US-A1- 2004 020 016

## Description

### Field of the Invention

The invention is comprised in the field of devices used for attaching two plates provided with slot holes. Particularly, but not exclusively, the plates are a cable tray and a connecting profile for assembling two cable trays.

More specifically, the invention relates to a composite dowel for making an attachment between two plates provided with slot holes arranged one against another with their respective slot holes perpendicular to and facing one another forming a passage for said composite dowel.

### State of the Art

In order to lay cables in a space using cable trays, cable trays are placed in the longitudinal direction one after another and assembled to one another at their ends by means of a connecting profile which is attached to the cable trays. This connecting profile is provided with slot holes extending in the longitudinal direction of the cable trays and facing corresponding slot holes of the cable trays, which are orthogonal to and have the same width as the slot holes of said connecting profile, such that the two slot holes facing one another results in the formation of a square passage for an attachment device. ES1173383U discloses an attachment device which provides a sliding attachment between the connecting profile and the tray. Although this attachment device suitably performs its function, it can be improved in terms of attachment robustness. Particularly, an attachment device which prevents play between the two parts in normal conditions and which makes a stronger attachment, such that it only allows sliding under the effect of a significant longitudinal force, such as the one which can be caused by thermal expansion of a long cable tray, is desirable. Moreover, given that the two faces of the plates are accessible in the envisaged applications, it is desirable for the tip of the device which projects from the slot holes to be less prone to snagging on external elements such as cables and/or causing injuries to the users.

ES2433442T3 and KR20090130469A disclose composite dowels of the type indicated above, which are intended for fixing upholstery elements to the inner face of a motor vehicle body plate. In these applications, the rear face of the plate is not accessible, so the last problem mentioned above is not considered. The flexible tabs forming the oblong retention body of the retention dowel have a free end, and the rod of the locking pin has a harpoon-shaped end projecting through the end of the inner passage of said retention body. This configuration is necessary to enable removing the composite dowel implanted in the hole of the body plate by pulling the locking pin which is the only accessible element and which, as a result of its harpoon-shaped end, in turn pulls on the retention dowel. The fins of the rod which are introduced into the through notches of the retention body serve to fix an angular position between the two elements, necessary to ensure a correct anchoring of the harpoon-shaped end of the rod. ES2433442T3 mentions that another purpose of these fins is to prevent the tabs of the retention body from bending when the retention body is introduced into the hole of the plate. The composite dowels described in these two documents could be used to attach two plates with orthogonal slot holes, but this would not satisfactorily solve all the problems mentioned above.

WO2021111055A1 discloses a composite dowel in which fins of the locking pin push lateral tabs of the retention dowel in a way causing a rotative deformation thereof in a radial plane, allowing an isotropic behavior of the dowel when it is exposed to various stresses.

### Description of the Invention

The purpose of the invention is to provide a composite dowel of the type indicated above, which allows making a firmer attachment between the plates and reducing the risk of the composite dowel, once installed, from being able to snag on external elements or to cause injury to a user, all this without complicating the installation tasks and without increasing manufacturing costs.

This purpose is achieved by means of a composite dowel as defined in claim 1. Furthermore, the claimed invention relates to an assembly as defined in claim 14.

The contour in the form of a prismatic surface with a square cross-section of the retention body fits the square shape of the superimposed orthogonal slot holes of the plates, such that when the rod of the locking pin is pressure-introduced into the inner passage between the tabs, each tab deforms and exerts pressure on most of the surface of the slot hole facing said tab. An attachment between the plates that is stronger, but at the same time allows sliding between the plates if one of them is subjected to a very large force, is thereby achieved. Furthermore, the fins of the rod of the locking pin have a particular effect, which consists of constituting the vertices of a square corresponding to the square shape of the passage formed by the slot holes of the plates. In the final coupling position, the fins thus arranged prevent, in a highly reliably manner, the retention body from being able to rotate in the slot holes if it is subjected to a torque high enough so as to deform the tabs such that the contour of the retention body loses its square shape. It will be observed that, in the invention, the fins do not perform the functions described in the prior state of the art mentioned above: the fins do not prevent the tabs from bending when being introduced into the slot holes, since this is achieved as a result of the ends of the tabs being attached to one another; and furthermore, it is not necessary to prevent a rotation of the locking pin. Therefore, the fins should be eliminated to simplify the part and to achieve material saving. However, the fins are present in the composite dowel according to the invention for a different purpose, which consists of providing the particular technical effect described above. Moreover, the fact that the ends of the tabs are attached to one another prevents them from opening outwards and forming surfaces with sharp borders, so the risk of the tabs snagging on external elements or causing injuries to a user is reduced.

Preferably, in said free position in which the rod is not introduced into the inner passage, the outer faces of the four tabs form an outer contour of the retention body in the form of a prismatic surface with a square cross-section along the entire length of said retention body, except in an end segment of said retention body, opposite the base, in which the ends of the tabs are attached to one another. This allows having a single attachment dowel model applicable to different plate thicknesses.

Preferably, an end face of the retention body, opposite the base, has a through opening surrounded by a perimeter attaching the tabs to one another. This configuration facilitates the outward elastic deformation of the tabs when they are stressed by the rod pressure-introduced into the inner passage.

Preferably, the retention dowel and the locking pin are formed such that, in the final coupling position, the head of the locking pin is applied against the base of the retention dowel and the end of the rod opposite said head does not project through the through opening. Therefore, the exposed portion of the end of the composite dowel projecting from one of the plates is only the end of the tabs attached to one another, so the risk of snagging on external elements or causing injuries to a user is reduced.

Preferably, the retention dowel and the locking pin are formed such that, in the final coupling position, an end face of the rod, opposite the head, is arranged in the through opening and flush with the end face of the retention body. This configuration provides increased strength to the end of the retention body in the final coupling position, since it reduces the risk of the attachment between the tabs breaking in the case of an impact with an external element.

Preferably, an end segment of the retention body, in which the ends of the tabs are attached to one another, forms a frustoconical outer surface of said retention body in continuity of the outer faces of the tabs. This shape facilitates the introduction of the retention body into the slot holes and also reduces the risk of snagging on external elements or causing injuries to a user in the final coupling position.

Preferably, the through notches extend partially into the frustoconical outer surface of the retention body, thereby facilitating the outward elastic deformation of the tabs when they are stressed by the rod pressure-introduced into the inner passage.

Preferably, there are formed on the outer face of each tab deformable retention ribs extending in planes orthogonal to a longitudinal direction of the retention body and distributed along said tab. These retention ribs deform when they are flattened against the walls of the slot holes and thereby partially absorb the elastic deformation of the tabs when the rod is pressure-introduced into the inner passage.

Preferably, said rod comprises a first groove and a second groove, said first groove being arranged farther away from the head than said second groove in the direction of the central axis of said rod and the retention body comprises in the inner passage a lip having a shape corresponding to the shape of said first and second grooves, such that in an intermediate coupling position, in which the rod is partially introduced into the inner passage without causing the elastic deformation of the tabs, said rod is retained in said inner passage by the fitting of said lip in said first groove, and in the final coupling position said rod is retained in said inner passage by the fitting of said lip in said second groove. The intermediate coupling position allows supplying the user with the two parts assembled together, so the user does not have to handle two parts. The fitting of the lip in the first groove is a simple solution which provides sufficient strength in order to supply the two parts assembled together from the factory. The fitting of the lip in the second groove provides a supplementary attachment force between the two parts in the final coupling position, which adds to the force from the pressure introduction of the rod into the inner passage. The lip and the grooves are internal retention means which do not affect the external geometry of the composite dowel and therefore do not contribute to the creation of protrusions which can snag on external elements or cause injuries to a user.

In preferred embodiments, the inner passage has a frustoconical segment and an end segment arranged farther away from said base than said frustoconical segment, and said rod has a frustoconical segment at its end opposite said head, with said frustoconical segment of the rod being complementary with said frustoconical segment of the inner passage, such that in the intermediate coupling position said frustoconical segment of the rod is fitted, without pressure, to said frustoconical segment of the inner passage, and in said final coupling position, said frustoconical segment of the rod is pressure-introduced into said end segment of the inner passage and causes said elastic deformation of the tabs. This configuration increases the stability of the coupling in the intermediate coupling position, provided by the fitting of the lip in the first groove and, moreover, facilitates the pressure introduction of the rod into the inner passage in the final coupling position.

Preferably, a face of the base of the retention dowel facing the head of the locking pin comprises at least one recess extending from the perimeter of said base such that, in the final coupling position, said head is applied against said face of the base and said recess forms between said face of the base and said head a gap accessible from the outside to receive a head of a flat-head screwdriver. This gap allows the locking pin, placed in the final coupling position, to be readily removed with the help of a flat-head screwdriver.

Preferably, the vertices of the prismatic surface, of the outer contour of the retention body formed by the outer faces of the four tabs, are beveled. This configuration eliminates sharp borders in the retention body and furthermore facilitates the protrusion of the fins from the through notches and they thereby constitute a better support to ensure the integrity of the tabs.

Preferably, the retention dowel and the locking pin are each a single part molded from a polymer material. Preferably, the polymer material is an electrically insulating material. The material can be, for example, a thermoplastic such as PVC, polycarbonate, or polypropylene, as well as a thermosetting resin.

The invention also comprises other detailed features shown in the following detailed description of an embodiment of the invention and in the attached figures.

### Brief Description of the Drawings

The advantages and features of the invention will become apparent from the following description in which a preferred embodiment of the invention is described in a non-limiting manner with respect to the scope of the main claim in reference to the figures.
Figures 1 to 6 show the retention dowel alone, in a free position. Figure 1 is a bottom perspective view. Figure 2 is a top perspective view. Figure 3 is a front view. Figure 4 is a front section view. Figure 5 is a top view. Figure 6 is a bottom view.
Figures 7 to 11 show the locking pin alone. Figure 7 is a bottom perspective view. Figure 8 is a front view. Figure 9 is a front section view. Figure 10 is a top view. Figure 11 is a bottom view.
Figures 12 to 16 show the composite dowel, formed by the retention dowel and the locking pin, in the intermediate coupling position. Figure 12 is a top perspective view. Figure 13 is a front view. Figure 14 is a top perspective view from a second angle. Figure 15 is a front view from the second angle. Figure 16 is a front section view.
Figures 17 to 19 show the composite dowel, formed by the retention dowel and the locking pin, in the final coupling position. Figure 17 is a front section view. Figure 18 is a bottom perspective view. Figure 19 is a front view.

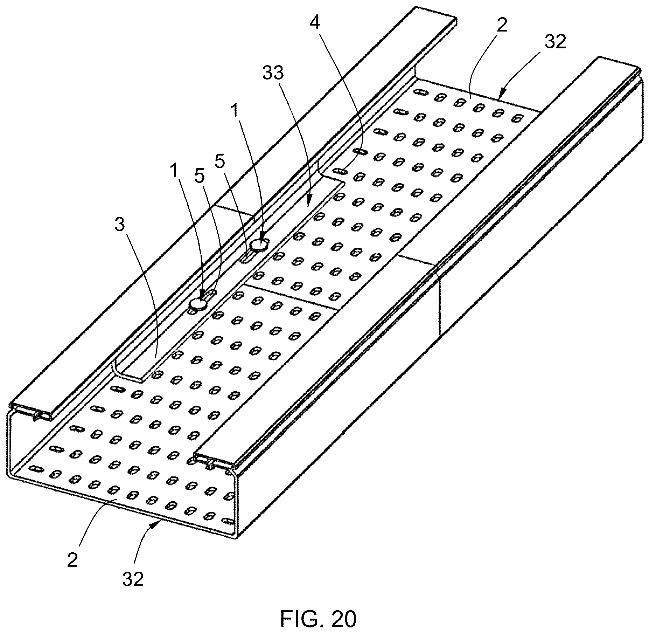

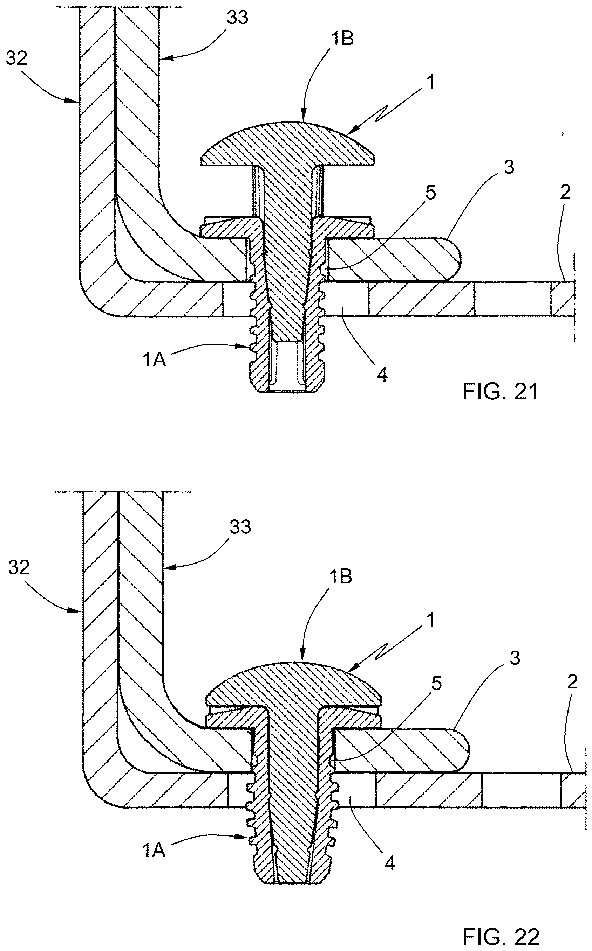

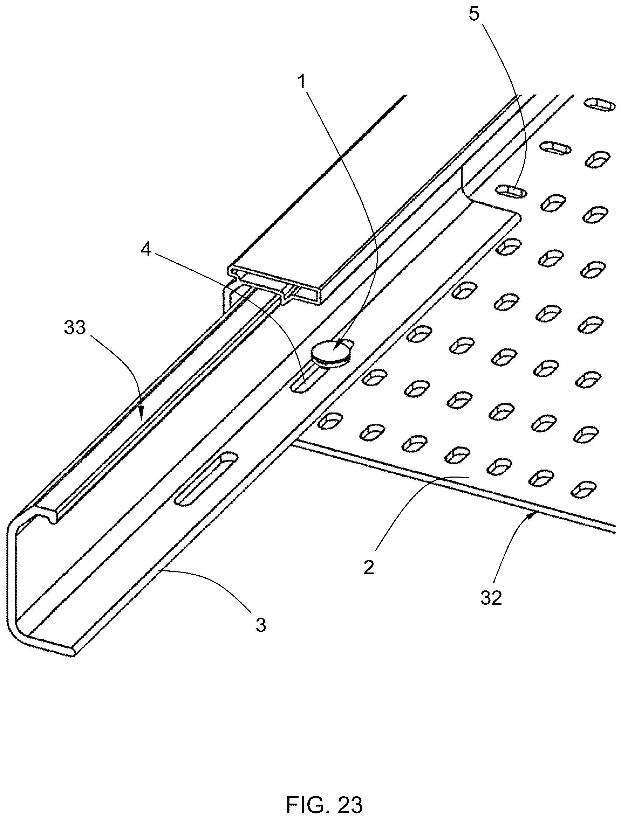

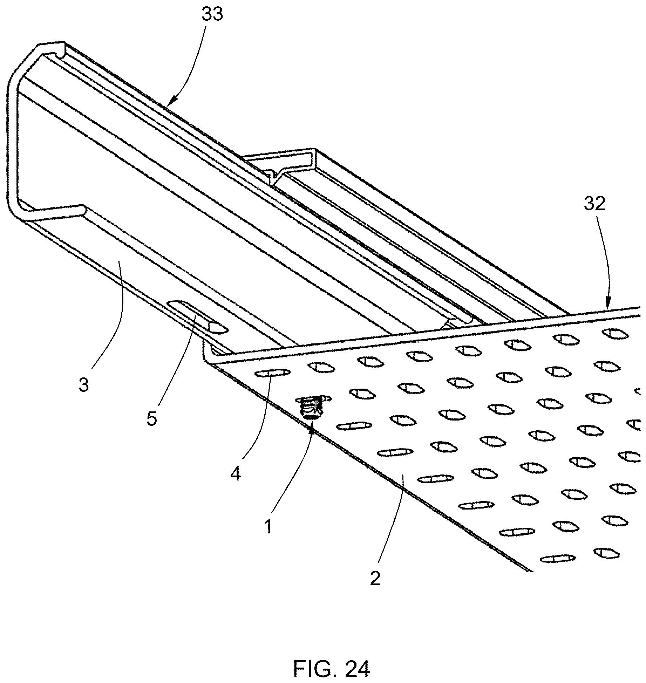

Figures 20 to 24 show the composite dowel assembled in an assembly of two cable trays attached by means of a connecting profile. The composite dowel makes the attachment between the connecting profile and the cable tray. Figure 20 is a view of the assembly. Figure 21 is a partial section view of a subassembly formed by a cable tray, the connecting profile, and the composite dowel placed in the intermediate coupling position. Figure 22 is a section view of the same subassembly with the composite dowel placed in the final coupling position. Figures 23 and 24 are, respectively, a top perspective view and a bottom perspective view of the same subassembly with the composite dowel placed in the final coupling position.

### Detailed Description of An Embodiment of the Invention

The embodiment shown by way of example in the figures corresponds to a particularly advantageous application of the composite dowel 1 according to the invention, in which said composite dowel 1 is used to assemble two cable trays 32, placed one after another, by means of a connecting profile 33, as shown in Figure 20. Figures 23 and 24 show the connecting profile 33 fitted at one end in one of the side walls of one of the cable trays 32. The other cable tray, which in turn is likewise attached to the other end of the connecting profile 33 by means of another identical composite dowel 1, has not been depicted. The composite dowel 1 is therefore applied to attach the connecting profile 33 to the cable tray 32, and the two plates 2, 3 provided with slot holes 4, 5 are, respectively, the bottom of the cable tray 32 and a wing of the connecting profile 33. The plates 2, 3 are arranged facing one another, with their respective slot holes 4, 5 arranged perpendicular to one another and forming a passage through which the composite dowel 1 is inserted. The two slot holes 4, 5 forming the passage have the same width, so that said passage has a square shape. As can be seen in the figures, the tray 32 has a row of identical slot holes 4 and the connecting profile 33 has two identical slot holes 5.

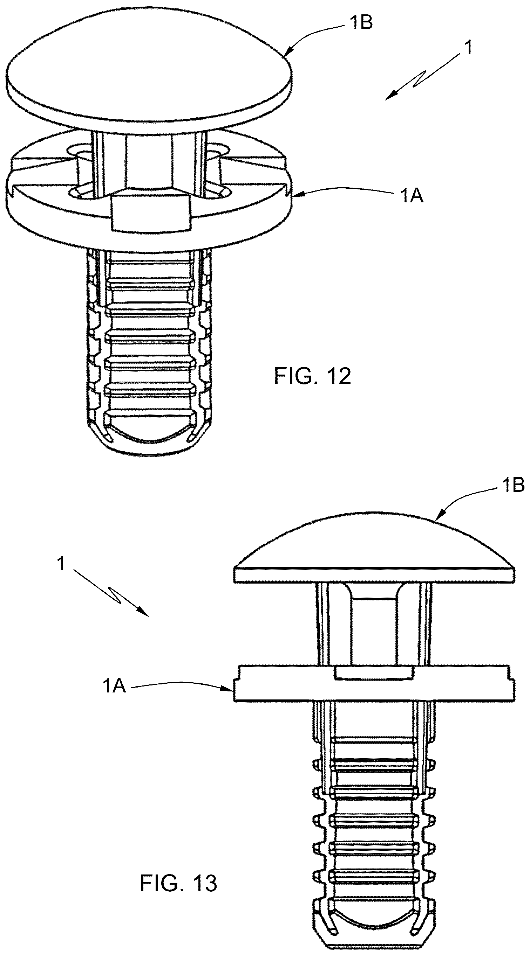

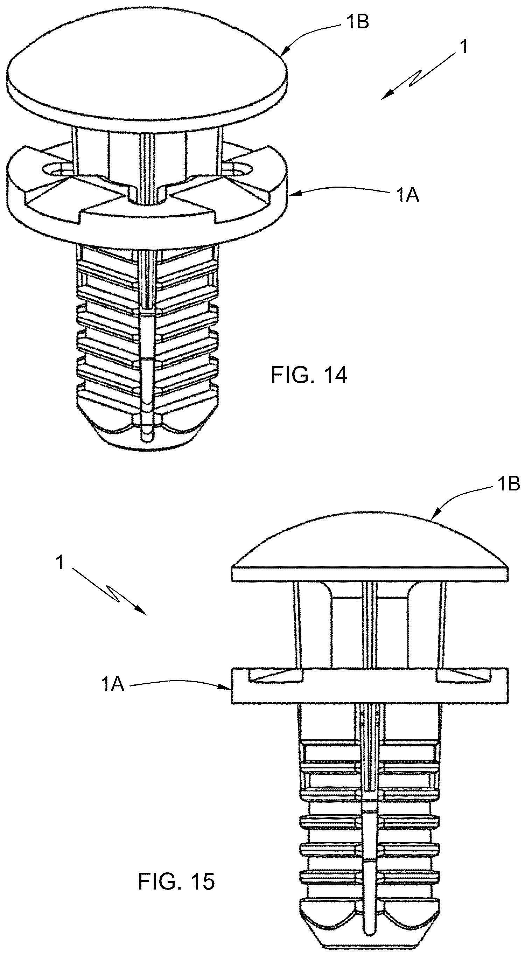

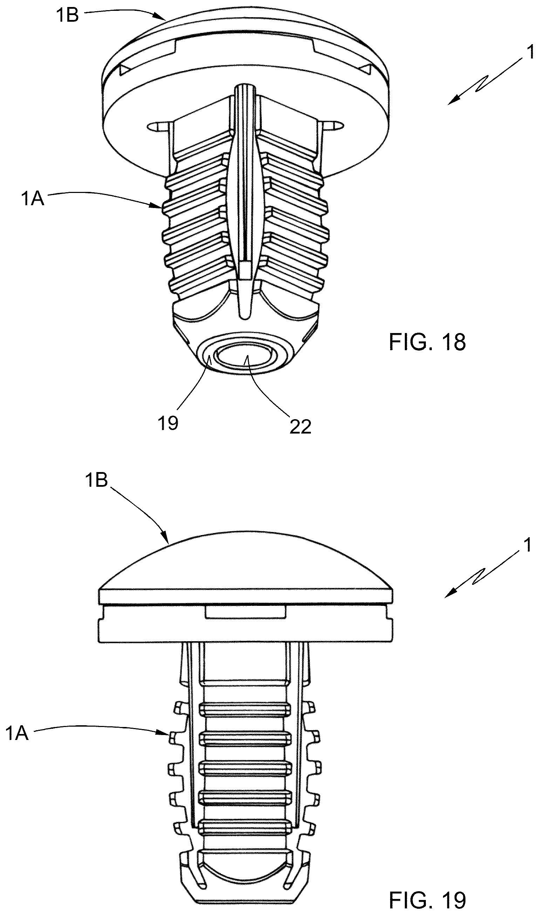

As can be seen in Figures 12 to 19, the composite dowel 1 is formed by two parts: a retention dowel 1A, intended for being retained in the passage formed by the slot holes 4, 5, in order to make the attachment between the two plates 2, 3, and a locking pin 1B which is introduced into the retention dowel 1A in order to lock it in said passage. Each of these two parts 1A, 1B is a part molded from a polymer material. An electrically insulating material with a surface resistivity greater than 100 MΩ such as, PVC (polyvinyl chloride), for example, is preferably chosen as the polymer material. The cable trays 32 and the connecting profile 33 also are preferably made of an electrically insulating material with a surface resistivity greater than 100 MΩ such as, PVC, for example.

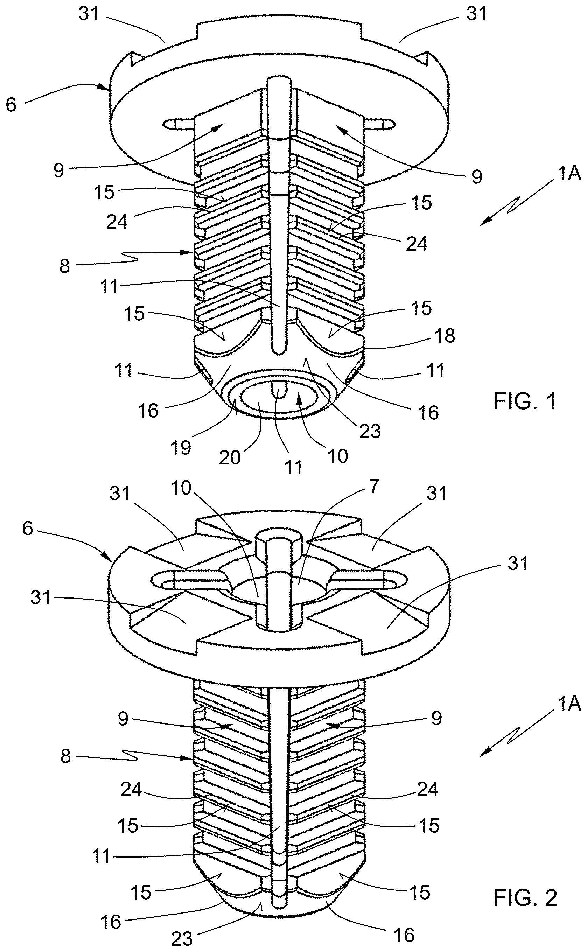

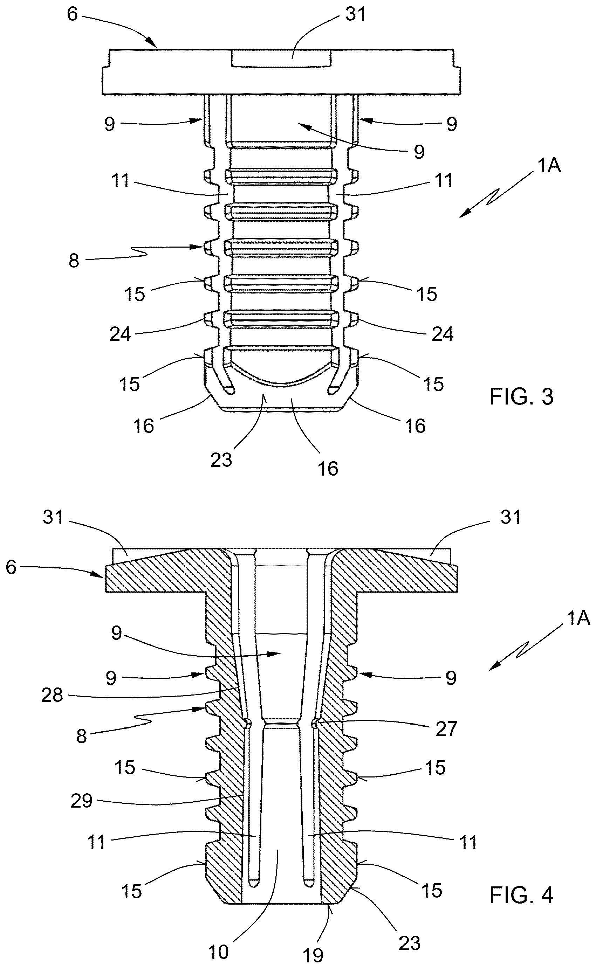

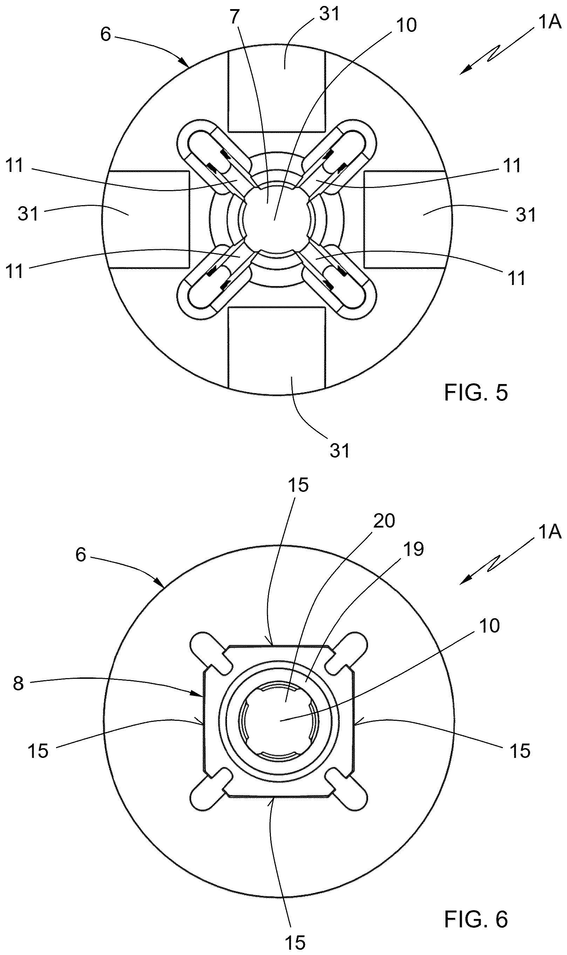

Figures 1 to 6 show the retention dowel 1A alone, in a free position. The retention dowel 1A comprises a base 6 and a radially expandable oblong retention body 8 to be housed and locked in the square passage formed by the slot holes 4, 5. The base 6 has a flat lower face intended for supporting the retention dowel 1A on the plate 3, and a through hole 7. The retention body 8 is formed by four flexible tabs 9 separated from one another by through notches 11 and extending from the base 6 demarcating between them an inner passage 10 aligned with the through hole 7 of the base 6. The through notches 11 do not reach the ends 16 of the tabs 9 opposite the base 6, such that said ends 16 of the tabs 9 are attached to one another. An end face 19 of the retention body 8, opposite the base 6, has a through opening 20 surrounded by a perimeter attaching the tabs 9 to one another. In the free position of the retention dowel 1A shown in Figures 1 to 6, each of the four tabs 9 has an outer face 15 in one plane, and said outer faces 15 of the four tabs 9 form an outer contour of the retention body 8 in the form of a prismatic surface with a square cross-section. Preferably, as can be seen in the figures, the four tabs 9 form an outer contour of the retention body 8 in the form of a prismatic surface with a square cross-section along the entire length of the retention body 8, except in an end segment 18 of said retention body 8, opposite the base 6, in which the ends 16 of the tabs 9 are attached to one another. There are formed on the outer face 15 of each tab 9 deformable retention ribs 24 extending in planes orthogonal to a longitudinal direction of the retention body 8 and distributed along said tab 9. The through notches 11 are arranged at the vertices of the prismatic surface with a square cross-section which, in this case, are beveled. The end segment 18 of the retention body 8 in which the ends 16 of the tabs 9 are attached to one another forms a frustoconical outer surface 23 of the retention body 8 in continuity of the outer faces 15 of the tabs 9. The through notches 11 extend partially into the frustoconical outer surface 23. The retention body 8 comprises in the inner passage 10 a lip 27 having a shape corresponding to first and second grooves 25, 26 of the rod 13 of the locking pin 1B, which will be described below. The inner passage 10 has a frustoconical segment 28 and an end segment 29 arranged farther away from said base 6 than said frustoconical segment 28. The lip 27 is in a plane where the segments 28 and 29 meet. An outer face of the base 6, opposite the retention body 8, comprises four recesses 31, each extending from the perimeter of said base 6. The four recesses 31 are separated from one another by an angle of 90° with respect to a central axis of the retention body 8. As will be seen below, the recesses 31 serve to form, between the outer face of the base 6 and the head 12 of the locking pin 1B, a gap accessible from the outside to receive a head of a flat-head screwdriver.

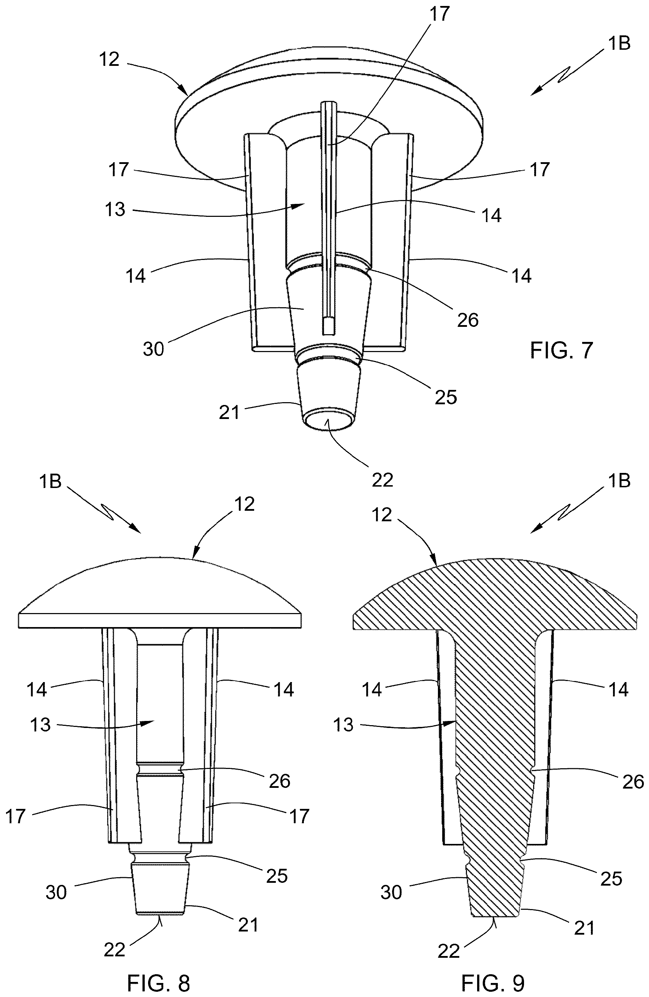

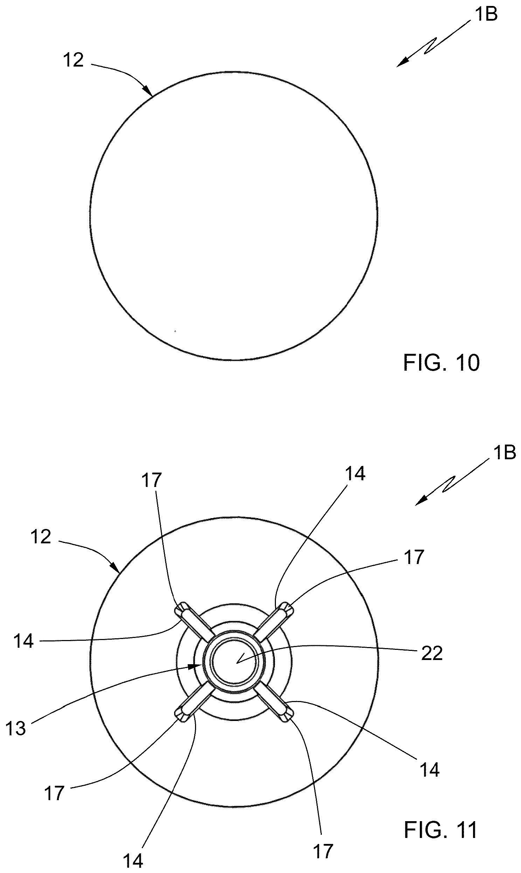

Figures 7 to 11 show the locking pin 1B alone. The locking pin 1B comprises a head 12 and a rod 13 with four fins 14 extending in two planes orthogonal to one another and radial with respect to a central axis of the rod 13, such that edges 17 of the end of said fins 14 are arranged at the vertices of a square in at least one segment the rod 13. Preferably, as can be seen in the figures, the outer edges 17 of the fins 14 are arranged at the vertices of a square along the entire length of the rod 13. The fins 14 can have a variable height, with respect to the central axis of the rod 13, along said rod 13. In the embodiment depicted in the figures, the fins 14 are identical to one another, the edges 17 are straight, and said fins 14 have a height that decreases slightly from the head 12 to the end of the rod 13. The rod 13 comprises a first groove 25 and a second groove 26. The first groove 25 is arranged farther away from the head 12 than the second groove 26 in the direction of the central axis of the rod 13. These first and second grooves 25, 26 are sized such that the lip 27 of the inner passage 10 of the retention body 8 has a shape corresponding to each of said grooves. As will be seen below, this allows the rod 13 to be retained in the inner passage in two different coupling positions. The rod 13 has a frustoconical segment 30 at its end opposite the head 12. This frustoconical segment 30 of the rod 13 is complementary with the frustoconical segment 28 of the inner passage 10.

Figures 12 to 16 show the composite dowel 1 in an intermediate coupling position, in which the rod 13 of the locking pin 1B is partially introduced into the inner passage 10 of the retention dowel 1A without causing an elastic deformation of the tabs 9. In this position, the frustoconical segment 30 of the rod 13 is fitted, without pressure, to the frustoconical segment 28 of the inner passage 10. The rod 13 is retained in the inner passage 10 by the fitting of the lip 27 in the first groove 25 of the rod 13.

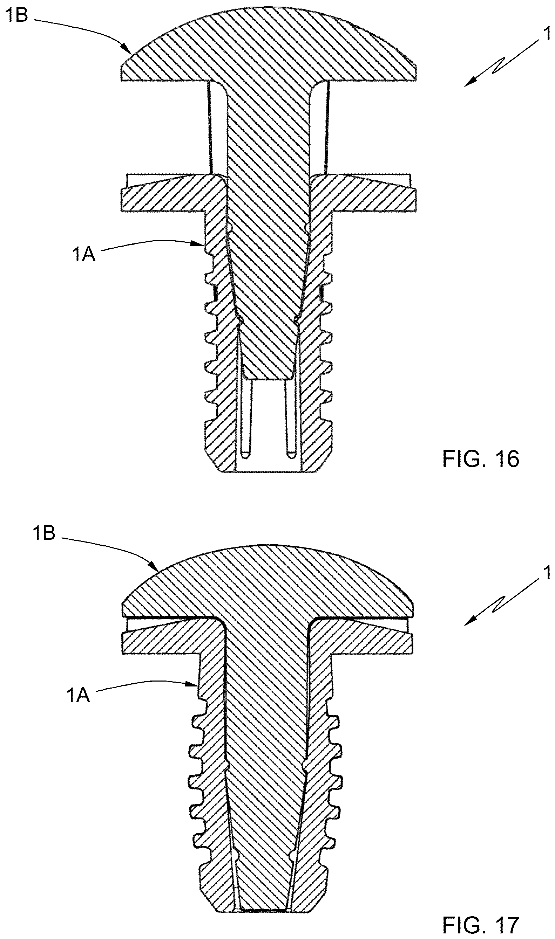

Figures 17 to 19 show the composite dowel 1 in a final coupling position, in which the rod 13 of the locking pin 1B is pressure-introduced into the inner passage 10 of the retention dowel 1A, through the through hole 7 of the base 6, causing an elastic deformation of the tabs 9 which radially expands the retention body 8. More specifically, in the depicted embodiment, the frustoconical segment 30 of the rod 13 is pressure-introduced into the end segment 29 of the inner passage 10 and causes the elastic deformation of the tabs 9. The fins 14 are introduced into the through notches 11 in the entire segment of the retention body 8 which has the outer contour in the form of a prismatic surface with a square cross-section. The rod 13 is furthermore retained in the inner passage 10 by the fitting of the lip 27 in the second groove 26 of said rod 13. The head 12 of the locking pin 1B is applied against the upper face of the base 6 of the retention dowel 1A on which the recesses 31 are formed. Each recess 31 forms, between the upper face of the base 6 and the head 12, a gap accessible from the outside to receive a head of a flat-head screwdriver. The end 21 of the rod 13 opposite said head 12 does not project through the through opening 20. The end face 22 of the rod, opposite the head 12, is arranged in the through opening 20 and flush with the end face 19 of the retention body 8.

Preferably, the composite dowel 1 is supplied from the factory in the intermediate coupling position shown in Figures 12 to 16. The retention dowel 1A and the locking pin 1B are manufactured by molding them separately and then coupling them in this intermediate position. The fitting of the lip 27 in the first groove 25 of the rod 13, together with the shape complementarity of the frustoconical segments 28 and 30, is sufficient to keep the two parts 1A and 1B coupled to one another in the event of possible impacts during transport or handling. To attach the plates 2 and 3, the user uses the composite dowel 1 provided in the intermediate coupling position and places it as shown in Figure 21. The retention body 8 is introduced entirely into the square passage formed by the slot holes 4, 5 and the base 6 of the retention dowel 1A is applied against the plate 3. The introduction of the retention body 8 into said square passage offers zero or low resistance, because the dimensions of the retention dowel 8, in cross-section, are at most very slightly larger than the dimensions of said square passage. Next, the user pushes the locking pin 1B through the head 12 to the final coupling position shown in Figure 22 described above. The tabs 9 have been elastically deformed by the pressure introduction of the rod 13 into the inner passage 10 and the retention ribs 24 have been flattened against the walls of the square passage, such that the retention body 8 is firmly pressure-locked in the square passage. The locking pin 1B is coupled to the retention dowel by the friction of the rod 13 pressure-introduced into the inner passage 10 and also by the fitting of the lip 27 in the second groove 26 of the rod 13. To remove the composite dowel 1, the user introduces the head of a flat-head screwdriver into one of the recesses 31 to pry the head 12 and to slightly lift the locking pin 1B. Then, he/she pulls the locking pin 1B by the head 12 until it again placed in the intermediate coupling position. In this position, the tabs 9 have returned to their standby position and the retention body 8 is no longer pressure-retained in the hole square. The retention dowel 1A and the locking pin 1B are coupled by the fitting of the lip 27 in the first groove 25 of the rod 13. The user can continue to pull the locking pin 1B by the head 12 and thus remove the entire composite dowel 1.

## Claims

1. A composite dowel (1) for making an attachment between two plates (2, 3) provided with slot holes (4, 5) arranged one against another with their respective slot holes (4, 5) perpendicular to and facing one another forming a passage for said composite dowel (1), said respective slot holes (4, 5) perpendicular to and facing one another having the same width, so that said passage for the composite dowel (1) has a square shape, said composite dowel (1) comprising:
- a retention dowel (1A) comprising a base (6), for the support of said retention dowel (1A) on one of said plates (2, 3), and an expandable oblong retention body (8) intended for being housed in said slot holes (4, 5), said retention body (8) being formed by four flexible tabs (9) separated from one another by four through notches (11) and extending from said base (6) demarcating between them an inner passage (10), said base (6) comprising a through hole (7) aligned with said inner passage (10); and
- a locking pin (1B) which is pressure-inserted into said retention dowel (1A) and comprises a head (12) and a rod (13) with four fins (14) extending in two radial planes with respect to a central axis of said rod (13), said two radial planes being orthogonal to one another;
said retention dowel (1A) and said locking pin (1B) being configured such that, in a final coupling position, said rod (13) is pressure-introduced into said inner passage (10) through said through hole (7) and causes an elastic deformation of said tabs (9) which radially expands said retention body (8), and said four fins (14) are introduced into said four through notches (11);
**characterized in that**:
- said four tabs (9) are made such that, in a free position of said retention dowel (1A), in which said rod (13) is not introduced into said inner passage (10), each of said tabs (9) has an outer face (15) in one plane, and said outer faces (15) of the four tabs (9) form an outer contour of said retention body (8) in the form of a prismatic surface with a square cross-section in at least one segment of said retention body (8), wherein the vertices of said prismatic surface can be optionally beveled;
- said four through notches (11) are arranged at the vertices of said prismatic surface with a square cross-section, and said four through notches (11) do not reach the ends (16) of said tabs (9) opposite said base (6), such that said ends (16) of the four tabs (9) are attached to one another;
- said fins (14) are arranged so that edges (17) of said fins (14) are arranged at the vertices of a square in at least one segment of said rod (13) which, in said final coupling position, is introduced into said segment of the retention body (8) having the outer contour in the form of a prismatic surface with a square cross-section.

2. The composite dowel (1) according to claim 1, **characterized in that**, in said free position, in which said rod (13) is not introduced into said inner passage (10), said outer faces (15) of the four tabs (9) form an outer contour of said retention body (8) in the form of a prismatic surface with a square cross-section along the entire length of said retention body (8), except in an end segment (18) of said retention body (8), opposite said base (6), in which said ends (16) of the tabs (9) are attached to one another.

3. The composite dowel (1) according to any one of claims 1 or 2, **characterized in that** an end face (19) of said retention body (8), opposite said base (6), has a through opening (20) surrounded by a perimeter attaching said tabs (9) to one another.

4. The composite dowel (1) according to claim 3, **characterized in that**, in said final coupling position, said head (12) of the locking pin (1B) is applied against said base (6) of the retention dowel (1A) and the end (21) of said rod (13) opposite said head (12) does not project through said through opening (20).

5. The composite dowel (1) according to claim 4, **characterized in that**, in said final coupling position, an end face (22) of said rod (13), opposite said head (12), is in said through opening (20) and flush with said end face (19) of the retention body (8).

6. The composite dowel (1) according to any one of claims 1 to 5, **characterized in that** an end segment (18) of said retention body (8), in which said ends (16) of the tabs (9) are attached to one another, forms a frustoconical outer surface (23) of said retention body (8) in continuity of said outer faces (15) of the tabs (9).

7. The composite dowel (1) according to claim 6, **characterized in that** said through notches (11) extend partially into said frustoconical outer surface (23).

8. The composite dowel (1) according to any one of claims 1 to 7, **characterized in that** there are formed on said outer face (15) of each tab (9) deformable retention ribs (24) extending in planes orthogonal to a longitudinal direction of said retention body (8) and distributed along said tab (9)

9. The composite dowel (1) according to any one of claims 1 to 8, **characterized in that** said rod (13) comprises a first groove (25) and a second groove (26), with said first groove (25) being arranged farther away from said head (12) than said second groove (26) in the direction of the central axis of said rod (13), and said retention body (8) comprises in said inner passage (10) a lip (27) having a shape corresponding to the shape of said first and second grooves (25, 26), such that in an intermediate coupling position, in which said rod (13) is partially introduced into said inner passage (10) without causing said elastic deformation of the tabs (9), said rod (13) is retained in said inner passage (10) by the fitting of said lip (27) in said first groove (25), and in said final coupling position said rod (13) is retained in said inner passage (10) by the fitting of said lip (27) in said second groove (26).

10. The composite dowel (1) according to claim 9, **characterized in that** said inner passage (10) has a frustoconical segment (28) and an end segment (29) arranged farther away from said base (6) than said frustoconical segment (28), and said rod (13) has a frustoconical segment (30) at its end opposite said head (12), with said frustoconical segment (30) of said rod (13) being complementary with said frustoconical segment (28) of the inner passage (10), such that in said intermediate coupling position, said frustoconical segment (30) of the rod (13) is fitted, without pressure, to said frustoconical segment (28) of the inner passage (10), and in said final coupling position, said frustoconical segment (30) of the rod (13) is pressure-introduced into said end segment (29) of the inner passage (10) and causes said elastic deformation of the tabs (9).

11. The composite dowel (1) according to any one of claims 1 to 10, **characterized in that** a face of said base (6), opposite said retention body (8), comprises at least one recess (31) extending from the perimeter of said base (6) such that, in said final coupling position, said head (12) is applied against said face of the base (6) and said recess (31) forms between the face of the said base (6) and said head (12) a gap accessible from the outside to receive a head of a flat-head screwdriver.

12. The composite dowel (1) according to any one of claims 1 to 11, **characterized in that** the vertices of said prismatic surface, of the outer contour of the retention body (8) formed by the outer faces (15) of the four tabs (9), are beveled.

13. The composite dowel (1) according to any one of claims 1 to 12, **characterized in that** said retention dowel (1A) and said locking pin (1B) are each a single part molded from a polymer material.

14. - An assembly comprising:
- two plates (2, 3) provided with slot holes (4, 5) arranged one against another with their respective slot holes (4, 5) perpendicular to and facing one another forming a passage for said composite dowel (1), wherein said respective slot holes (4, 5) perpendicular to and facing one another have the same width, so that said passage has a square shape;
- and a composite dowel (1) according to any one of claims 1 to 13;
wherein said retention body (8) of the retention dowel (1A) is introduced entirely into said square passage formed by said slot holes (4, 5), and said base (6) of the retention dowel (1A) is applied against one (3) of said two plates (2, 3);
and wherein said outer contour in the form of a prismatic surface with a square cross-section formed by the outer faces (15) of the four tabs (9) fits the square shape of said passage, such that in sad final coupling position, in which said rod (13) of the locking pin (1B) is pressure-introduced into said inner passage (10), each of said tabs (9) exerts pressure on most of the surface of the slot hole (4, 5) facing said tab (9), and said four fins (14) of the rod (13) of the locking pin (1B) constitute the vertices of a square corresponding to the square shape of said passage formed by the slot holes (4, 5).

## Patentansprüche

1. Verbunddübel (1) zum Herstellen einer Befestigung zwischen zwei mit Langlöchern (4, 5) versehenen Platten (2, 3), die gegeneinander angeordnet sind mit ihren jeweiligen Langlöchern (4, 5) senkrecht zueinander und einander zugewandt, um einen Durchgang für den Verbunddübel (1) zu bilden, wobei die jeweiligen Langlöcher (4, 5), die senkrecht zueinander und einander zugewandt sind, die gleiche Breite haben, so dass der Durchgang für den Verbunddübel (1) eine quadratische Form hat, wobei der Verbunddübel (1) umfasst:
- einen Rückhaltedübel (1A), der eine Basis (6) für die Abstützung des Rückhaltedübels (1A) auf einer der Platten (2, 3) und einen ausdehnbaren länglichen Rückhaltekörper (8) umfasst, der dazu bestimmt ist, in den Langlöchern (4, 5) aufgenommen zu werden, wobei der Rückhaltekörper (8) aus vier biegsamen Laschen (9) besteht, die durch vier durchgehende Kerben (11) voneinander getrennt sind und sich von der Basis (6) aus erstrecken, die zwischen ihnen einen inneren Durchgang (10) abgrenzt, wobei die Basis (6) ein Durchgangsloch (7) aufweist, das mit dem inneren Durchgang (10) ausgerichtet ist; und
- einen Verriegelungsstift (1B), der unter Druck in den Rückhaltedübel (1A) eingeführt wird und einen Kopf (12) und eine Stange (13) mit vier Rippen (14) umfasst, die sich in zwei radialen Ebenen in Bezug auf eine Mittelachse der Stange (13) erstrecken, wobei die beiden radialen Ebenen orthogonal zueinander sind; wobei der Rückhaltedübel (1A) und der Verriegelungsstift (1B) dazu eingerichtet sind, dass in einer endgültigen Kupplungsposition die Stange (13) durch das Durchgangsloch (7) mit Druck in den inneren Durchgang (10) eingeführt wird und eine elastische Verformung der Laschen (9) verursacht, die den Rückhaltekörper (8) radial ausdehnt, und die vier Rippen (14) in die vier Durchgangsnuten (11) eingeführt werden;
**dadurch gekennzeichnet, dass**:
- die vier Laschen (9) so ausgebildet sind, dass in einer freien Position des Rückhaltedübels (1A), in der die Stange (13) nicht in den inneren Durchgang (10) eingeführt ist, jede der Laschen (9) eine Außenfläche (15) in einer Ebene aufweist, und die Außenflächen (15) der vier Laschen (9) eine Außenkontur des Rückhaltekörpers (8) in Form einer prismatischen Fläche mit einem quadratischen Querschnitt in mindestens einem Segment des Rückhaltekörpers (8) bilden, wobei die Scheitelpunkte der prismatischen Fläche optional abgeschrägt sein können;
- die vier durchgehenden Durchgangsnuten (11) an den Scheitelpunkten der prismatischen Fläche mit quadratischem Querschnitt angeordnet sind und die vier durchgehenden Durchgangsnuten (11) die Enden (16) der Laschen (9) gegenüber der Basis (6) nicht erreichen, so dass die Enden (16) der vier Laschen (9) aneinander befestigt sind;
- die Rippen (14) so angeordnet sind, dass die Kanten (17) der Rippen (14) an den Eckpunkten eines Quadrats in mindestens einem Segment der Stange (13) angeordnet sind, die in der endgültigen Kupplungsposition in das Segment des Rückhaltekörpers (8) eingeführt ist, dass die Außenkontur in Form einer prismatischen Fläche mit quadratischem Querschnitt aufweist.

2. Verbunddübel (1) nach Anspruch 1, **dadurch gekennzeichnet, dass** in der freien Position, in der die Stange (13) nicht in den inneren Durchgang (10) eingeführt ist, die Außenflächen (15) der vier Laschen (9) eine Außenkontur des Rückhaltekörpers (8) in Form einer prismatischen Fläche mit quadratischem Querschnitt über die gesamte Länge des Rückhaltekörpers (8) bilden, mit Ausnahme eines Endabschnitts (18) des Rückhaltekörpers (8) gegenüber der Basis (6), in dem die Enden (16) der Laschen (9) aneinander befestigt sind.

3. Verbunddübel (1) nach einem der Ansprüche 1 oder 2, **dadurch gekennzeichnet, dass** eine Endfläche (19) des Rückhaltekörpers (8), gegenüber der Basis (6), eine Durchgangsöffnung (20) aufweist, die von einem Umfang umgeben ist, der die Laschen (9) aneinander befestigt.

4. Verbunddübel (1) nach Anspruch 3, **dadurch gekennzeichnet, dass** in der endgültigen Kupplungsposition der Kopf (12) des Verriegelungsstifts (1B) an der Basis (6) des Rückhaltedübels (1A) anliegt und das dem Kopf (12) gegenüberliegende Ende (21) der Stange (13) nicht durch die Durchgangsöffnung (20) ragt.

5. Verbunddübel (1) nach Anspruch 4, **dadurch gekennzeichnet, dass** in der endgültigen Kupplungsposition eine Endfläche (22) der Stange (13), gegenüber dem Kopf (12), in der Durchgangsöffnung (20) liegt und mit der Endfläche (19) des Rückhaltekörpers (8) bündig ist.

6. Verbunddübel (1) nach einem der Ansprüche 1 bis 5, **dadurch gekennzeichnet, dass** ein Endabschnitt (18) des Rückhaltekörpers (8), in dem die Enden (16) der Laschen (9) aneinander befestigt sind, eine kegelstumpfförmige Außenfläche (23) des Rückhaltekörpers (8) in Kontinuität mit den Außenflächen (15) der Laschen (9) bildet.

7. Verbunddübel (1) nach Anspruch 6, **dadurch gekennzeichnet, dass** die durchgehenden Durchgangsnuten (11) teilweise in die kegelstumpfförmige Außenfläche (23) hineinreichen.

8. Verbunddübel (1) nach einem der Ansprüche 1 bis 7, **dadurch gekennzeichnet, dass** an der Außenfläche (15) jeder Lasche (9) verformbare Rückhalterippen (24) ausgebildet sind, die sich in Ebenen senkrecht zu einer Längsrichtung des Rückhaltekörpers (8) erstrecken und entlang der Lasche (9) verteilt sind.

9. Verbunddübel (1) nach einem der Ansprüche 1 bis 8, **dadurch gekennzeichnet, dass** die Stange (13) eine erste Nut (25) und eine zweite Nut (26) umfasst, wobei die erste Nut (25) in Richtung der Mittelachse der Stange (13) weiter vom Kopf (12) entfernt angeordnet ist als die zweite Nut (26), und wobei der Rückhaltekörper (8) in dem inneren Durchgang (10) eine Lippe (27) aufweist, deren Form der Form der ersten und zweiten Nut (25, 26) entspricht, so dass in einer Zwischenkupplungsposition, in der die Stange (13) teilweise in den inneren Durchgang (10) eingeführt ist, ohne die elastische Verformung der Laschen (9) zu bewirken, die Stange (13) in dem inneren Durchgang (10) durch den Sitz der Lippe (27) in der ersten Nut (25) gehalten wird, und in der endgültigen Kupplungsposition die Stange (13) in dem inneren Durchgang (10) durch den Sitz der Lippe (27) in der zweiten Nut (26) gehalten wird.

10. Verbunddübel (1) nach Anspruch 9, **dadurch gekennzeichnet, dass** der innere Durchgang (10) ein kegelstumpfförmiges Segment (28) und ein Endsegment (29) aufweist, das weiter von der Basis (6) entfernt angeordnet ist als das kegelstumpfförmige Segment (28), und wobei die Stange (13) an ihrem dem Kopf (12) gegenüberliegenden Ende ein kegelstumpfförmiges Segment (30) aufweist, wobei das kegelstumpfförmige Segment (30) der Stange (13) komplementär zu dem kegelstumpfförmigen Segment (28) des inneren Durchgangs (10) ist, so dass in der Zwischenkupplungsposition das kegelstumpfförmige Segment (30) der Stange (13) ohne Druck in das kegelstumpfförmige Segment (28) des inneren Durchgangs (10) eingepasst ist und in der endgültigen Kupplungsposition das kegelstumpfförmige Segment (30) der Stange (13) unter Druck in das Endsegment (29) des inneren Durchgangs (10) eingeführt wird und die elastische Verformung der Laschen (9) bewirkt.

11. Verbunddübel (1) nach einem der Ansprüche 1 bis 10, **dadurch gekennzeichnet, dass** eine dem Rückhaltekörper (8) gegenüberliegende Fläche der Basis (6) mindestens eine Vertiefung (31) umfasst, die sich vom Umfang der Basis (6) aus erstreckt, so dass in der endgültigen Kupplungsposition der Kopf (12) an der Fläche der Basis (6) anliegt und die Vertiefung (31) zwischen der Fläche der Basis (6) und dem Kopf (12) einen von außen zugänglichen Spalt bildet, um einen Kopf eines Schlitzschraubendrehers aufzunehmen.

12. Verbunddübel (1) nach einem der Ansprüche 1 bis 11, **dadurch gekennzeichnet, dass** die Scheitelpunkte der prismatischen Fläche der Außenkontur des Rückhaltekörpers (8), die von den Außenflächen (15) der vier Laschen (9) gebildet wird, abgeschrägt sind.

13. Verbunddübel (1) nach einem der Ansprüche 1 bis 12, **dadurch gekennzeichnet, dass** der Rückhaltedübel (1A) und der Verriegelungsstift (1B) jeweils ein einziges Teil sind, das aus einem Polymermaterial geformt ist.

14. Eine Baugruppe umfassend:
- zwei mit Langlöchern (4, 5) versehene Platten (2, 3), die gegeneinander angeordnet sind, mit ihren jeweiligen Langlöchern (4, 5) senkrecht zueinander und einander zugewandt um einen Durchgang für den Verbunddübel (1) zu bilden, wobei die jeweiligen Langlöcher (4, 5), die senkrecht zueinander und einander zugewandt sind, die gleiche Breite haben, so dass der Durchgang eine quadratische Form hat;
- und einen Verbunddübel (1) nach einem der Ansprüche 1 bis 13;
wobei der Rückhaltekörper (8) des Rückhaltedübels (1A) vollständig in den durch die Langlöcher (4, 5) gebildeten quadratischen Durchgang eingeführt ist, und die Basis (6) des Rückhaltedübels (1A) gegen eine (3) der beiden Platten (2, 3) angelegt ist;
und wobei die Außenkontur in Form einer prismatischen Fläche mit quadratischem Querschnitt, die von den Außenflächen (15) der vier Laschen (9) gebildet wird, an die quadratische Form des Durchgangs angepasst ist, so dass in der traurigen endgültigen Kupplungsposition, in der die Stange (13) des Verriegelungsstifts (1B) unter Druck in den inneren Durchgang (10) eingeführt wird, jede der Laschen (9) Druck auf den größten Teil der Oberfläche des Langlochs (4, 5) ausübt, das der Lasche (9) zugewandt ist, und die vier Rippen (14) der Stange (13) des Verriegelungsstifts (1B) die Eckpunkte eines Quadrats bilden, das der quadratischen Form des durch die Langlöcher (4, 5) gebildeten Durchgangs entspricht.

## Revendications

1. Cheville composite (1) pour la réalisation d'une fixation entre deux plaques (2, 3) munies de trous oblongs (4, 5), agencées l'une contre l'autre avec leurs trous oblongs (4, 5) respectifs perpendiculaires les uns aux autres et les uns en face des autres, ce qui forme un passage pour ladite cheville composite (1), lesdits trous oblongs (4, 5) respectifs perpendiculaires les uns aux autres et les uns en face des autres ayant la même largeur, de sorte que ledit passage pour la cheville composite (1) possède une forme carrée, ladite cheville composite (1) comprenant :
- une cheville de rétention (1A) comprenant une base (6), pour l'appui de ladite cheville de rétention (1A) sur l'une desdites plaques (2, 3), et un corps de rétention (8) oblong extensible destiné à être logé dans lesdits trous oblongs (4, 5), ledit corps de rétention (8) étant formé par quatre pattes (9) flexibles séparées les unes des autres par quatre encoches traversantes (11) et s'étendant à partir de ladite base (6) en délimitant entre elles un passage interne (10), ladite base (6) comprenant un trou traversant (7) aligné avec ledit passage interne (10) ; et
- une goupille de verrouillage (1B) qui est insérée par pression dans ladite cheville de rétention (1A) et comprend une tête (12) et une tige (13) dotée de quatre ailettes (14) s'étendant dans deux plans radiaux par rapport à un axe central de ladite tige (13), lesdits deux plans radiaux étant orthogonaux l'un à l'autre ;
ladite cheville de rétention (1A) et ladite goupille de verrouillage (1B) étant configurées de sorte que, dans une position de couplage finale, ladite tige (13) soit introduite par pression dans ledit passage interne (10) à travers ledit trou traversant (7) et provoque une déformation élastique desdites pattes (9) ce qui dilate radialement ledit corps de rétention (8), et lesdites quatre ailettes (14) sont introduites dans lesdites quatre encoches traversantes (11) ;
**caractérisée en ce que** :
- lesdites quatre pattes (9) sont réalisées de sorte que, dans une position libre de ladite cheville de rétention (1A), dans laquelle ladite tige (13) n'est pas introduite dans ledit passage interne (10), chacune desdites pattes (9) possède une face externe (15) dans un plan, et lesdites faces externes (15) des quatre pattes (9) forment un contour externe dudit corps de rétention (8) sous la forme d'une surface prismatique dotée d'une section transversale carrée dans au moins un segment dudit corps de rétention (8), dans lequel les sommets de ladite surface prismatique peuvent être facultativement biseautés ;
- lesdites quatre encoches traversantes (11) sont agencées aux sommets de ladite surface prismatique dotée d'une section transversale carrée, et lesdites quatre encoches traversantes (11) n'atteignent pas les extrémités (16) desdites pattes (9) opposées à ladite base (6), de sorte que lesdites extrémités (16) des quatre pattes (9) soient fixées les unes aux autres ;
- lesdites ailettes (14) sont agencées de sorte que des bords (17) desdites ailettes (14) soient agencés aux sommets d'un carré dans au moins un segment de ladite tige (13) qui, dans ladite position de couplage finale, est introduit dans ledit segment du corps de rétention (8) ayant le contour externe sous forme d'une surface prismatique dotée d'une section transversale carrée.

2. Cheville composite (1) selon la revendication 1, **caractérisée en ce que**, dans ladite position libre, dans laquelle ladite tige (13) n'est pas introduite dans ledit passage interne (10), lesdites faces externes (15) des quatre pattes (9) forment un contour externe dudit corps de rétention (8) sous la forme d'une surface prismatique dotée d'une section transversale carrée le long de la totalité de la longueur dudit corps de rétention (8), sauf dans un segment d'extrémité (18) dudit corps de rétention (8), opposé à ladite base (6), dans lequel lesdites extrémités (16) des pattes (9) sont fixées les unes aux autres.

3. Cheville composite (1) selon l'une quelconque des revendications 1 ou 2, **caractérisée en ce qu'**une face d'extrémité (19) dudit corps de rétention (8), opposée à ladite base (6), possède une ouverture traversante (20) encerclée par un périmètre fixant lesdites pattes (9) les unes aux autres.

4. Cheville composite (1) selon la revendication 3, **caractérisée en ce que**, dans ladite position de couplage finale, ladite tête (12) de la goupille de verrouillage (1B) est appliquée contre ladite base (6) de la cheville de rétention (1A) et l'extrémité (21) de ladite tige (13) opposée à ladite tête (12) ne fait pas saillie à travers ladite ouverture traversante (20).

5. Cheville composite (1) selon la revendication 4, **caractérisée en ce que**, dans ladite position de couplage finale, une face d'extrémité (22) de ladite tige (13), opposée à ladite tête (12), est dans ladite ouverture traversante (20) et en affleurement avec ladite face d'extrémité (19) du corps de rétention (8).

6. Cheville composite (1) selon l'une quelconque des revendications 1 à 5, **caractérisée en ce qu'**un segment d'extrémité (18) dudit corps de rétention (8), dans lequel lesdites extrémités (16) des pattes (9) sont fixées les unes aux autres, forme une surface externe tronconique (23) dudit corps de rétention (8) en continuité desdites faces externes (15) des pattes (9).

7. Cheville composite (1) selon la revendication 6, **caractérisée en ce que** lesdites encoches traversantes (11) s'étendent partiellement dans ladite surface externe tronconique (23).

8. Cheville composite (1) selon l'une quelconque des revendications 1 à 7, **caractérisée en ce que**, sur ladite face externe (15) de chaque patte (9), sont formées des nervures de rétention (24) déformables s'étendant dans des plans orthogonaux à une direction longitudinale dudit corps de rétention (8) et réparties le long de ladite patte (9)

9. Cheville composite (1) selon l'une quelconque des revendications 1 à 8, **caractérisée en ce que** ladite tige (13) comprend une première rainure (25) et une seconde rainure (26), ladite première rainure (25) étant agencée plus loin de ladite tête (12) que ladite seconde rainure (26) dans la direction de l'axe central de ladite tige (13), et ledit corps de rétention (8) comprend, dans ledit passage interne (10), une lèvre (27) ayant une forme correspondant à la forme desdites première et seconde rainures (25, 26), de sorte que, dans une position de couplage intermédiaire, dans laquelle ladite tige (13) est partiellement introduite dans ledit passage interne (10) sans provoquer ladite déformation élastique des pattes (9), ladite tige (13) soit retenue dans ledit passage interne (10) par l'ajustement de ladite lèvre (27) dans ladite première rainure (25), et dans ladite position de couplage finale, ladite tige (13) soit retenue dans ledit passage interne (10) par l'ajustement de ladite lèvre (27) dans ladite seconde rainure (26).

10. Cheville composite (1) selon la revendication 9, **caractérisée en ce que** ledit passage interne (10) possède un segment tronconique (28) et un segment d'extrémité (29) agencé plus loin de ladite base (6) que ledit segment tronconique (28), et ladite tige (13) possède un segment tronconique (30) à son extrémité opposée à ladite tête (12), ledit segment tronconique (30) de ladite tige (13) étant complémentaire dudit segment tronconique (28) du passage interne (10), de sorte que, dans ladite position de couplage intermédiaire, ledit segment tronconique (30) de la tige (13) soit ajusté, sans pression, avec ledit segment tronconique (28) du passage interne (10), et dans ladite position de couplage finale, ledit segment tronconique (30) de la tige (13) soit introduit par pression dans ledit segment d'extrémité (29) du passage interne (10) et provoque ladite déformation élastique des pattes (9).

11. Cheville composite (1) selon l'une quelconque des revendications 1 à 10, **caractérisée en ce qu'**une face de ladite base (6), opposée audit corps de rétention (8), comprend au moins un évidement (31) s'étendant à partir du périmètre de ladite base (6) de sorte que, dans ladite position de couplage finale, ladite tête (12) soit appliquée contre ladite face de ladite base (6) et ledit évidement (31) forme, entre la face de ladite base (6) et ladite tête (12), un espace accessible depuis l'extérieur pour recevoir une tête d'un tournevis à tête plate.

12. Cheville composite (1) selon l'une quelconque des revendications 1 à 11, **caractérisée en ce que** les sommets de ladite surface prismatique, du contour externe du corps de rétention (8) formé par les faces externes (15) des quatre pattes (9), sont biseautés.

13. Cheville composite (1) selon l'une quelconque des revendications 1 à 12, **caractérisée en ce que** ladite cheville de rétention (1A) et ladite goupille de verrouillage (1B) sont chacune une pièce unique moulée à partir d'un matériau polymère.

14. - Ensemble comprenant :
- deux plaques (2, 3) munies de trous oblongs (4, 5), agencées l'une contre l'autre avec leurs trous oblongs (4, 5) respectifs perpendiculaires les uns aux autres et les uns en face des autres, ce qui forme un passage pour ladite cheville composite (1), dans lequel lesdits trous oblongs (4, 5) respectifs perpendiculaires les uns aux autres et les uns en face des autres ayant la même largeur, de sorte que ledit passage possède une forme carrée ;
- et une cheville composite (1) selon l'une quelconque des revendications 1 à 13 ;
dans lequel ledit corps de rétention (8) de la cheville de rétention (1A) est introduit entièrement dans ledit passage carré formé par lesdits trous oblongs (4, 5), et ladite base (6) de la cheville de rétention (1A) est appliquée contre une plaque (3) parmi lesdites deux plaques (2, 3) ;
et dans lequel ledit contour externe sous la forme d'une surface prismatique dotée d'une section transversale carrée formée par les faces externes (15) des quatre pattes (9) s'ajuste à la forme carrée dudit passage, de sorte que, dans ladite position de couplage finale, dans laquelle ladite tige (13) de la goupille de verrouillage (1B) est introduite par pression dans ledit passage interne (10), chacune desdites pattes (9) exerce une pression sur la majeure partie de la surface du trou oblong (4, 5) faisant face à ladite patte (9), et lesdites quatre ailettes (14) de la tige (13) de la goupille de verrouillage (1B) constituent les sommets d'un carré correspondant à la forme carrée dudit passage formé par les trous oblongs (4, 5).
